# EUROPEAN PATENT SPECIFICATION

(11) **EP 4 080 625 B1**
(45) Date of publication and mention of the grant of the patent: **30.10.2024**
(21) Application number: 21186456.6
(22) Date of filing: 19.07.2021
(51) Int. Cl.: H01M 8/0273, H01M 8/0276, H01M 8/0297, H01M 8/0286

(54) **FUEL CELL**
BRENNSTOFFZELLE
PILE À COMBUSTIBLE

(30) Priority: 23.04.2021 KR 20210053017
(43) Date of publication of application: 26.10.2022
(73) Proprietor: Hyundai Motor Company, Seoul 06797 (KR); Kia Corporation, Seocho-gu Seoul 06797 (KR)
(72) Inventor: KIM, Hyun Jeong, 16891 Gyeonggi-do (KR); KIM, Bae Jung, 16891 Gyeonggi-do (KR); KIM, Ah Reum, 16891 Gyeonggi-do (KR); VAHC, Zuh Youn, 16891 Gyeonggi-do (KR); CHOI, Hyun Kyu, 16891 Gyeonggi-do (KR); KIM, Sun Hwi, 16891 Gyeonggi-do (KR); KIM, Chan Gi, 16891 Gyeonggi-do (KR)
(74) Representative: dompatent von Kreisler Selting Werner - Partnerschaft von Patent- und Rechtsanwälten mbB

(56) References cited:
- US-A1- 2006 141 318
- US-A1- 2008 305 384
- US-A1- 2009 029 217
- US-A1- 2011 014 541
- US-A1- 2012 270 131

## Description

### TECHNICAL FIELD

The present disclosure relates to a fuel cell, and more particularly, to a fuel cell capable of improving safety and reliability and simplifying a structure and a manufacturing process.

### BACKGROUND ART

A fuel cell stack refers to a kind of power generation device that generates electrical energy through a chemical reaction of fuel (e.g., hydrogen), and the fuel cell stack may be configured by stacking several tens or hundreds of fuel cells (unit cells) in series.

More specifically, the fuel cell may include a membrane electrode assembly (MEA) and separators (an anode separator and a cathode separator) disposed on two opposite surfaces of the membrane electrode assembly.

The separators have gas flow paths through which fuel (e.g., hydrogen) and reactant gas (e.g., air) are supplied to the membrane electrode assembly, and a cooling flow path along which a coolant flows.

In addition, in order to configure the fuel cell stack by stacking the fuel cells, sealability needs to be maintained between the membrane electrode assembly and reaction surfaces of the separators and between cooling surfaces of the separators.

To this end, gaskets are provided between the membrane electrode assembly and the reaction surfaces of the separators and the cooling surfaces of the separators. That is, the gaskets are provided to prevent the gases (hydrogen and air) flowing to the reaction surfaces of the separators from leaking to the outside of the fuel cell stack and to prevent the coolant flowing to the cooling surfaces of the separators from leaking to the outside of the fuel cell stack.

The gaskets may be integrally provided, by injection molding, on edge portions of two opposite surfaces of the separator and with edge portions of two opposite sides of each manifold for allowing the gas and the coolant to flow in and out. The flow paths for the gases and the coolant may be defined by the gaskets.

Meanwhile, in order to ensure stable performance of the fuel cell and safety and reliability of the fuel cell, coupled and sealed states of the separators needs to be securely maintained.

However, in the related art, because the separators (e.g., an anode separator of a first fuel cell and a cathode separator of a second fuel cell disposed adjacent to the first fuel cell), which constitute adjacent unit cells (fuel cells), are coupled (fastened) to each other by welding, there are problems in that productivity and production efficiency are difficult to improve and production costs are increased.

Moreover, the portions coupled by welding (the coupled portions between the separators) are vulnerable to corrosion, impact, and the like and may be easily deformed or damaged during the process of stacking and fastening the fuel cells. The deformation of and the damage to the coupled portions between the separators cause a problem of a deterioration in sealing performance of the separators.

In addition, after the fuel cell stack is assembled by stacking the plurality of fuel cells, each of the fuel cells (unit cells) needs to be tested for activation and defects, and the fuel cell, which is determined to be defective, needs to be replaced with another fuel cell.

However, in the related art, since the separators (e.g., the anode separator of the first fuel cell and the cathode separator of the second fuel cell) constituting different unit cells (fuel cells) are coupled by welding, all the two sets of separators stacked on the two opposite surfaces of the membrane electrode assembly (a first set of separators stacked on one surface of the membrane electrode assembly and configured by welding the two separators and a second set of separators stacked on the other surface of the membrane electrode assembly and configured by welding the two separators) need to be inevitably replaced in order to replace a defective fuel cell determined to be defective.

In other words, in the related art, because at least four separators (the two sets of separators) need to be disassembled and separated in order to replace a single defective fuel cell, there is a problem in that the time and costs required to replace the fuel cell are increased. US 2011/014541 A1 describes a fuel cell according to the preamble of claim 1. US 2006/141318 A1 discloses a fuel cell stack comprising a membrane electrode assembly, a first and a second separator and a first and a second sealing member.

Therefore, recently, various types of studies have been conducted to stably maintain a state in which separators are coupled in fuel cells and to easily handle the fuel cells, but the study result is still insufficient. Accordingly, there is a need to develop a technology for stably maintaining the state in which the separators are coupled in the fuel cells and easily handling the fuel cells.

### SUMMARY

This Summary is provided to introduce a selection of concepts in simplified form that are further described below in the Detailed Description. This Summary is not intended to identify key features or essential features of the claimed subject matter, nor is it intended to be used as an aid in determining the scope of the claimed subject matter.

In one general aspect, a fuel cell includes: a membrane electrode assembly (MEA); a first separator stacked on a first surface of the membrane electrode assembly; a second separator stacked on a second surface of the membrane electrode assembly; a first sealing member disposed on the first separator and configured to seal a space between the first separator and the membrane electrode assembly; a second sealing member disposed on the second separator and configured to seal a space between the second separator and the membrane electrode assembly; and a fastening part configured to fasten the first sealing member to the second sealing member.

The fastening part includes a first fastening clip disposed on the first sealing member and configured to be fastened to the second sealing member.

The first fastening clip may include a first clip body connected to the first sealing member; and a first clip protrusion connected to the first clip body and defining a first receiving portion that is configured to accommodate the second sealing member in cooperation with the first clip body.

The second sealing member may have a through portion disposed in a thickness direction thereof, and the first fastening clip may be configured to pass through the through portion.

The fuel cell may include an elastic protrusion disposed on a circumferential surface of the first clip body facing an inner wall surface of the through portion, and the elastic protrusion may be elastically compressed between the inner wall surface of the through portion and the circumferential surface of the first clip body.

The first fastening clip may be disposed unitarily with the first sealing member.

The first fastening clip and the first sealing member may be integrally injection molded on the first separator.

The fastening part may include a second fastening clip disposed on the second sealing member and configured to be fastened to the first sealing member.

The second fastening clip may include: a second clip body connected to the second sealing member; and a second clip protrusion connected to the second clip body and defining a second receiving portion that is configured to accommodate the first sealing member in cooperation with the second clip body.

The second fastening clip may be disposed unitarily with the second sealing member.

The second fastening clip and the second sealing member may be integrally injection molded on the second separator.

The fuel cell may include: a first extension portion extending from an end of the first sealing member; and a second extension portion extending from an end of the second sealing member to correspond to the first extension portion, the first fastening clip may be disposed on the first extension portion, and the second fastening clip may be disposed on the second extension portion.

The fuel cell may include: a guide protrusion protruding from a surface of the first sealing member that faces the second sealing member; and a guide hole defined in the second sealing member to correspond to the guide protrusion and configured to accommodate the guide protrusion.

The membrane electrode assembly may have an alignment hole, and the guide protrusion may be configured to pass through the alignment hole to be accommodated in the guide hole.

The fuel cell may include a through hole defined in the second separator to correspond to the guide protrusion and configured to accommodate the guide protrusion.

Other features and aspects will be apparent from the following detailed description, the drawings, and the claims.

### BRIEF DESCRIPTION OF THE DRAWINGS

FIG. 1 is a view for explaining a fuel cell according to an embodiment of the present disclosure.
FIG. 2 is a view for explaining a first separator and a second separator of the fuel cell according to the embodiment of the present disclosure.
FIG. 3 is a view for explaining a fastening part of the fuel cell according to the embodiment of the present disclosure.
FIG. 4 is a view for explaining a first fastening clip of the fuel cell according to the embodiment of the present disclosure.
FIG. 5 is a view for explaining a second fastening clip of the fuel cell according to the embodiment of the present disclosure.
FIG. 6 is a view for explaining a state in which the first fastening clip of the fuel cell according to the embodiment of the present disclosure is fastened.
FIG. 7 is a view for explaining a state in which the second fastening clip of the fuel cell according to the embodiment of the present disclosure is fastened.
FIG. 8 is a view for explaining elastic protrusions of the fuel cell according to the embodiment of the present disclosure.
FIG. 9 is a view for explaining a fuel cell stack to which the fuel cell according to the embodiment of the present disclosure is applied.

### DETAILED DESCRIPTION

Hereinafter, embodiments of the present disclosure will be described in detail with reference to the accompanying drawings.

However, the scope of the present disclosure is not limited to the embodiments described herein but may be implemented in various different forms.

In addition, unless otherwise specifically and explicitly defined and stated, the terms (including technical and scientific terms) used in the embodiments of the present disclosure may be construed as the meaning which may be commonly understood by the person with ordinary skill in the art to which the present disclosure pertains. The meanings of the commonly used terms such as the terms defined in dictionaries may be interpreted in consideration of the contextual meanings of the related technology.

In addition, the terms used in the embodiment of the present disclosure are for explaining the embodiments, not for limiting the present disclosure.

In the present specification, unless particularly stated otherwise, a singular form may also include a plural form. The expression "at least one (or one or more) of A, B, and C" may include one or more of all combinations that can be made by combining A, B, and C.

In addition, the terms such as first, second, A, B, (a), and (b) may be used to describe constituent elements of the embodiments of the present disclosure.

These terms are used only for the purpose of discriminating one constituent element from another constituent element, and the nature, the sequences, or the orders of the constituent elements are not limited by the terms.

Further, when one constituent element is described as being 'connected', 'coupled', or 'attached' to another constituent element, one constituent element may be connected, coupled, or attached directly to another constituent element or connected, coupled, or attached to another constituent element through still another constituent element interposed therebetween.

In addition, the expression "one constituent element is formed or disposed above (on) or below (under) another constituent element" includes not only a case in which the two constituent elements are in direct contact with each other, but also a case in which one or more other constituent elements are formed or disposed between the two constituent elements. In addition, the expression "above (on) or below (under)" may include a meaning of a downward direction as well as an upward direction based on one constituent element.

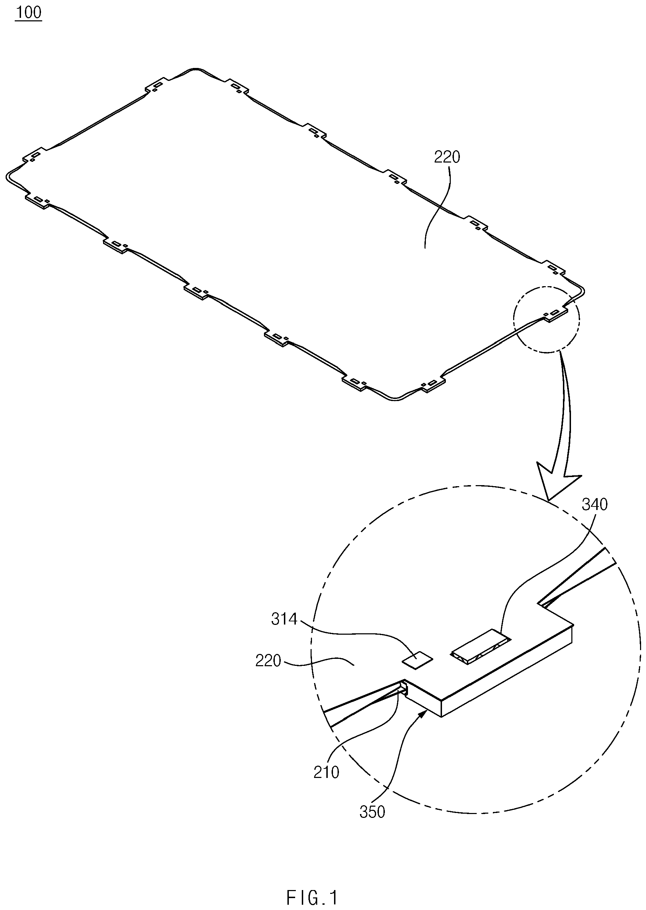

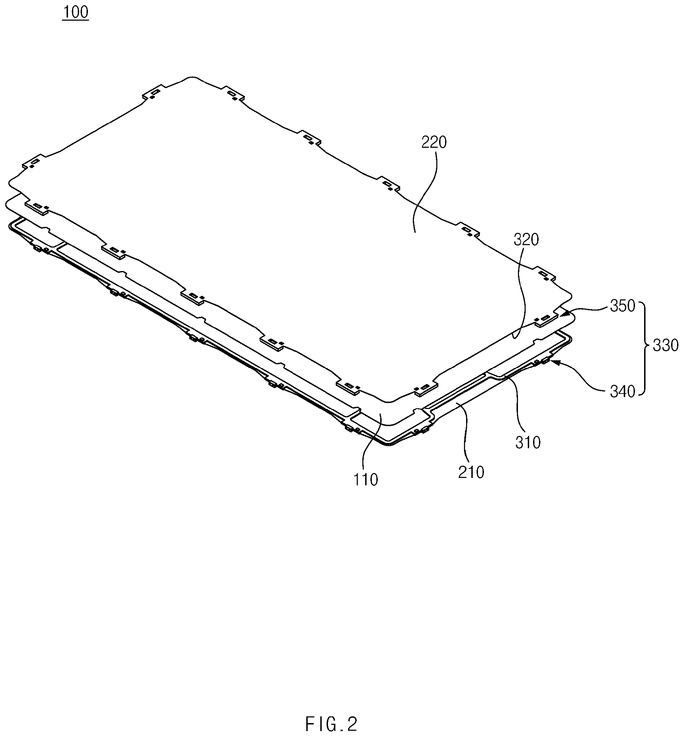

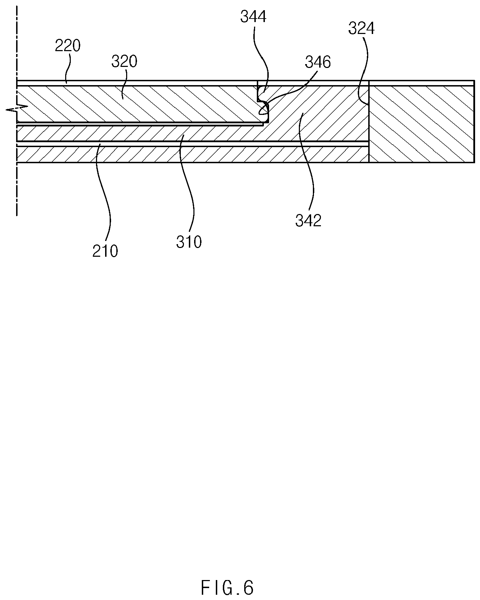

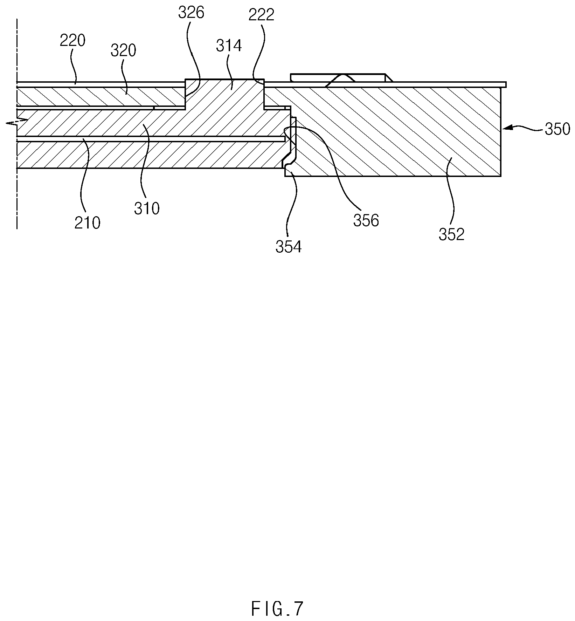

Referring to FIGS. 1 to 9, a fuel cell 100 according to an embodiment of the present disclosure includes a membrane electrode assembly (MEA) 110, a first separator 210 stacked on one surface of the membrane electrode assembly 110, a second separator 220 stacked on the other surface of the membrane electrode assembly 110, a first sealing member 310 provided on the first separator 210 and configured to seal a portion between the first separator 210 and the membrane electrode assembly 110, a second sealing member 320 provided on the second separator 220 and configured to seal a portion between the second separator 220 and the membrane electrode assembly 110, and a fastening part 330 configured to fasten the first sealing member 310 and the second sealing member 320.

For reference, the fuel cell 100 including the membrane electrode assembly 110, the first separator 210, and the second separator 220 constitutes a single unit cell which is independently modularized. In this case, the configuration in which the fuel cell 100 is independently modularized may mean that the fuel cell 100 constitutes an independent unit cell so that the adjacent fuel cells 100 may be individually separated.

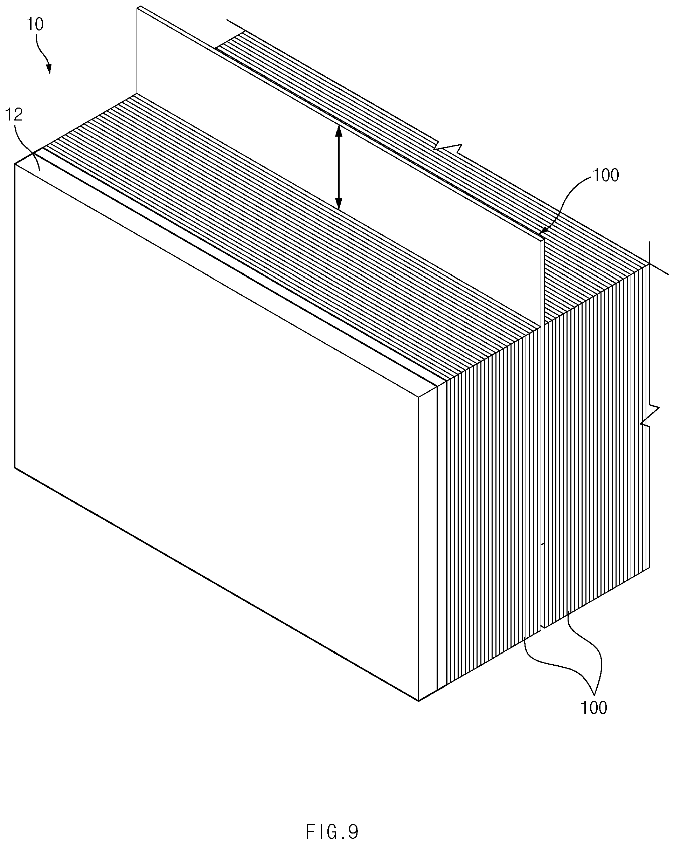

Referring to FIG. 9, a fuel cell stack 10 may be configured by stacking the plurality of fuel cells 100 in a reference direction and then assembling end plates 12 to two opposite ends of the plurality of fuel cells 100.

The membrane electrode assembly (MEA) 110 is provided to generate electricity by means of an oxidation-reduction reaction between a first reactant gas (e.g., hydrogen) and a second reactant gas (e.g., air).

A structure and a material of the membrane electrode assembly 110 may be variously changed in accordance with required conditions and design specifications, and the present disclosure is not limited or restricted by the structure and the material of the membrane electrode assembly 110.

For example, the membrane electrode assembly 110 includes the electrolyte membrane through which hydrogen ions move, and the catalyst electrode layers attached to two opposite surfaces of the electrolyte membrane, and the electrochemical reactions occur in the catalyst electrode layers. In addition, gas diffusion layers (GDLs) (not illustrated) may be provided at two opposite sides of the membrane electrode assembly 110, and the gas diffusion layers serve to uniformly distribute the reactant gases and transfer generated electrical energy.

The separators 200 are provided to supply the first reactant gas (e.g., hydrogen) and the second reactant gas (e.g., air) to the membrane electrode assembly 110 and disposed to be in close contact with one surface and the other surface of the membrane electrode assembly 110 in a direction in which the fuel cells 100 are stacked.

According to the exemplary embodiment of the present disclosure, the first separator 210 may be one of an anode separator and a cathode separator, and the second separator 220 may be the other of the anode separator and the cathode separator. The anode separator defines flow paths for fuel (e.g., hydrogen) which is the first reactant gas, and the cathode separator defines flow paths for an oxidant (e.g., air), which is the second reactant gas.

For example, referring to FIG. 1, the first separator 210 (the anode separator) for supplying hydrogen may be disposed on a lower surface of the membrane electrode assembly 110, and the second separator 220 (the cathode separator) for supplying air may be disposed on an upper surface of the membrane electrode assembly 110.

More specifically, the first separator 210 may be in close contact with the lower surface of the membrane electrode assembly 110, first channels (not illustrated) along which the first reactant gas (e.g., hydrogen) flows may be provided on one surface (an upper surface based on FIG. 1) of the first separator 210 that faces the membrane electrode assembly 110, and cooling channels (not illustrated) along which a coolant flows may be provided on the other surface (a lower surface based on FIG. 1) of the first separator 210.

The second separator 220 may be in close contact with the upper surface of the membrane electrode assembly 110, second channels (not illustrated) along which the second reactant gas (e.g., air) flows may be provided on one surface (a lower surface based on FIG. 1) of the second separator 220 that faces the membrane electrode assembly 110, and cooling channels (not illustrated) along which the coolant flows may be provided on the other surface (an upper surface based on FIG. 1) of the second separator 220.

The first separator 210 and the second separator 220 may serve not only to block hydrogen and air, which are the reactant gases, but also to ensure the flow paths for the reactant gas and the air and transmit electric current to an external circuit.

In addition, the separators may also serve to distribute heat, which is generated in the fuel cell 100, to the entire fuel cell 100, and the excessively generated heat may be discharged to the outside by the coolant flowing along the cooling flow paths (not illustrated) between the separators.

For example, each of the first separator 210 and the second separator 220 may be provided in the form of a thin metal film. The first separator 210 and the second separator 220, together with the membrane electrode assembly 110, may constitute the single fuel cell 100 (unit cell) and independently define the flow paths for the hydrogen, the air, and the coolant. According to another embodiment of the present disclosure, the separator may be made of another material such as graphite or a carbon composite.

For reference, hydrogen, which is the fuel, and air, which is the oxidant, are supplied to an anode (not illustrated) and a cathode (not illustrated) of the membrane electrode assembly 110, respectively, through the channels (not illustrated) in the first separator 210 and the second separator 220. The hydrogen may be supplied to the anode, and the air may be supplied to the cathode.

The hydrogen supplied to the anode is separated into hydrogen ions (protons) and electrons by catalysts in the electrode layers provided at two opposite sides of the electrolyte membrane. Only the hydrogen ions are selectively delivered to the cathode through the electrolyte membrane which is a positive ion exchange membrane, and at the same time, the electrons are delivered to the cathode through the gas diffusion layer and the separator which are conductors.

At the cathode, the hydrogen ions supplied through the electrolyte membrane and the electrons delivered through the separator meet oxygen in the air supplied to the cathode by an air supply device, thereby creating a reaction of producing water. As a result of the movement of the hydrogen ions, the electrons flow through external conductive wires, and the electric current is produced as a result of the flow of the electrons.

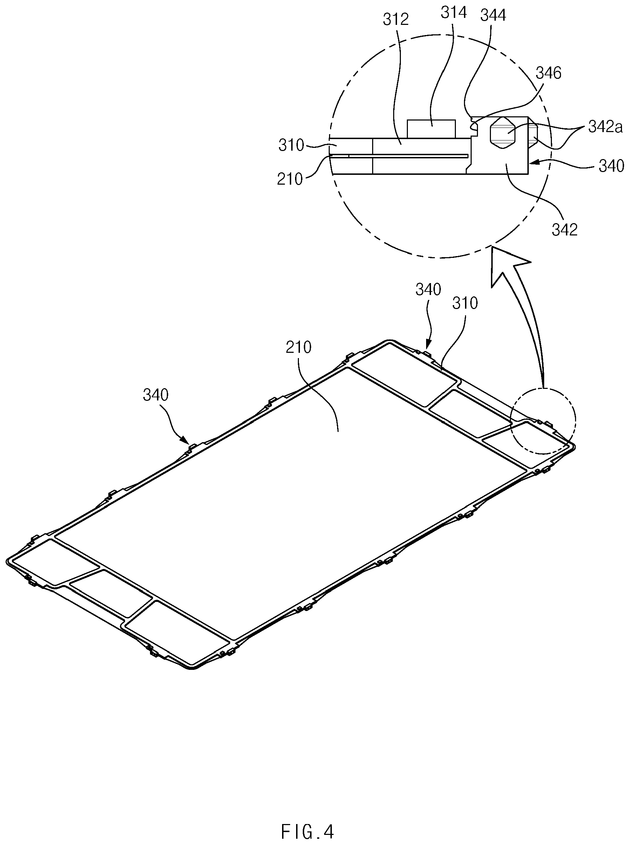

Referring to FIG. 4, the first sealing member 310 is provided on one surface of the first separator 210 that faces the membrane electrode assembly 110 and serves to seal the portion between the first separator 210 and the membrane electrode assembly 110.

The first sealing member 310 may have various structures capable of sealing the portion between the first separator 210 and the membrane electrode assembly 110, and the present disclosure is not limited or restricted by the structure and the shape of the first sealing member 310.

The first sealing member 310 may be made of an elastic material such as rubber (e.g., EPDM), silicone (or liquid silicone), or urethane, and the present disclosure is not limited or restricted by the material and the property of the first sealing member 310.

For example, the first sealing member 310 may include a first-1 sealing portion (not illustrated) provided along an edge of the first separator 210, and a first-2 sealing portion (not illustrated) connected to the first-1 sealing portion and configured to surround a first manifold part (not illustrated) provided in the first separator 210.

For example, the first-1 sealing portion may be provided, by injection molding, on the first separator 210 so as to have an approximately quadrangular ring shape along the edge of the first separator 210. The first-1 sealing portion provides sealability to prevent the reactant gas or the coolant from leaking to the outside.

The first-2 sealing portion may be provided, by injection molding, on the first separator 210 so as to surround the first manifold part. In this case, the configuration in which the first-2 sealing portion surrounds the first manifold part may means that a hydrogen inlet manifold (not illustrated), a coolant inlet manifold (not illustrated), an air outlet manifold (not illustrated), a hydrogen outlet manifold (not illustrated), a coolant outlet manifold (not illustrated), and an air inlet manifold (not illustrated) are individually sealed by the first-2 sealing portion.

In particular, a sealing pattern (e.g., a sealing protrusion) may be provided on a contact surface (close-contact surface) of the first sealing member 310, and the present disclosure is not limited or restricted by the structure and the shape of the sealing pattern.

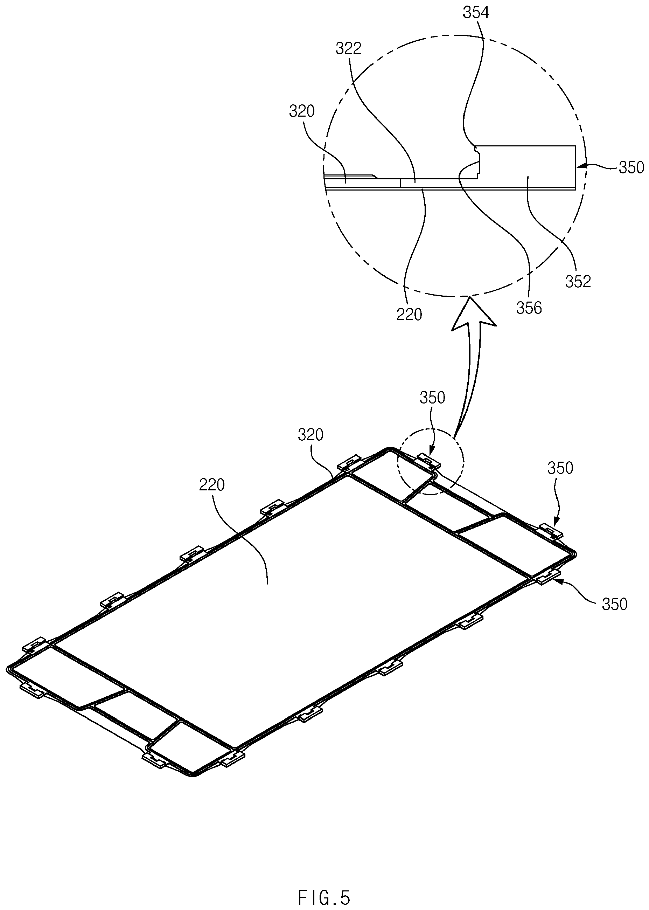

Referring to FIG. 5, the second sealing member 320 is provided on one surface of the second separator 220 that faces the membrane electrode assembly 110 and is provided to seal the portion between the second separator 220 and the membrane electrode assembly 110.

The second sealing member 320 may have various structures capable of sealing the portion between the second separator 220 and the membrane electrode assembly 110, and the present disclosure is not limited or restricted by the structure and the shape of the second sealing member 320.

The second sealing member 320 may be made of an elastic material such as rubber (e.g., EPDM), silicone (or liquid silicone), or urethane, and the present disclosure is not limited or restricted by the material and the property of the second sealing member 320.

For example, the second sealing member 320 may include a second-1 sealing portion (not illustrated) provided along an edge of the second separator 220, and a second-2 sealing portion (not illustrated) connected to the second-1 sealing portion and configured to surround a second manifold part (not illustrated) provided in the second separator 220.

For example, the second-1 sealing portion may be provided, by injection molding, on the second separator 220 so as to have an approximately quadrangular ring shape along the edge of the second separator 220. The second-1 sealing portion provides sealability to prevent the reactant gas or the coolant from leaking to the outside.

The second-2 sealing portion may be provided, by injection molding, on the second separator 220 so as to surround the second manifold part. In this case, the configuration in which the second-2 sealing portion surrounds the second manifold part may mean that a hydrogen inlet manifold (not illustrated), a coolant inlet manifold (not illustrated), an air outlet manifold (not illustrated), a hydrogen outlet manifold (not illustrated), a coolant outlet manifold (not illustrated), and an air inlet manifold (not illustrated) are individually sealed by the second-2 sealing portion.

In particular, a sealing pattern (e.g., a sealing protrusion) may be provided on a contact surface (close-contact surface) of the second sealing member 320, and the present disclosure is not limited or restricted by the structure and the shape of the sealing pattern.

Referring to FIGS. 1 to 7, the fastening part 330 is provided to fasten the first sealing member 310 and the second sealing member 320, and the first separator 210 and the second separator 220 may be integrally modularized by means of the fastening part 330.

In this case, the configuration in which the first sealing member 310 and the second sealing member 320 are fastened to each other may be defined as a concept including both a case in which the second sealing member 320 is constrained against the first sealing member 310 so that the second sealing member 320 is not spaced apart from the first sealing member 310 and a case in which the first sealing member 310 is constrained against the second sealing member 320 so that the first sealing member 310 is not spaced apart from the second sealing member 320.

The fastening part 330 may have various structures capable of fastening the first sealing member 310 and the second sealing member 320.

For example, the fastening part 330 may include first fastening clips 340 provided on the first sealing member 310 and configured to be fastened to the second sealing member 320.

According to the exemplary embodiment of the present disclosure, the first fastening clip 340 may be provided unitarily with the first sealing member 310.

In particular, the first fastening clip 340 may be made of the same material as or a similar material to the first sealing member 310.

More particularly, the first fastening clips 340 and the first sealing member 310 may be integrally provided on the first separator 210 by injection molding (e.g., dual injection molding). Since the first fastening clips 340 and the first sealing member 310 are integrally provided on the first separator 210 by injection molding as described above, the first sealing member 310 and the first fastening clips 340 may be provided together by means of a single injection molding process. As a result, it is possible to obtain an advantageous effect of simplifying a manufacturing process and improving productivity and production efficiency.

According to another embodiment of the present disclosure, the first fastening clips may be manufactured separately from the first sealing member and then attached or coupled to the first sealing member.

The first fastening clip 340 may have various structures capable of being fastened to (constrained against) the second sealing member 320.

Hereinafter, an example in which the fastening part 330 includes the plurality of first fastening clips 340 provided to be spaced apart from one another in a circumferential direction of the first sealing member 310 will be described. In this case, the number of first fastening clips 340 and a spacing interval between the first fastening clips 340 may be variously changed in accordance with required conditions and design specifications.

For example, the first fastening clip 340 may include a first clip body 342 connected to the first sealing member 310, and a first clip protrusion 344 connected to the first clip body 342 so as to be elastically flexible and configured to define a first receiving portion 346 that accommodates the second sealing member 320 in cooperation with the first clip body 342.

The first clip body 342 and the first clip protrusion 344 may be provided at an outer peripheral end of the first sealing member 310 so as to define the first receiving portion 346 having an approximately 'U' shape. In the state in which the first separator 210 and the second separator 220 are in close contact with one surface and the other surface of the membrane electrode assembly 110, a part of an end of the second sealing member 320 may be accommodated in the first receiving portion 346 so as to be disposed between the first clip body 342 and the first clip protrusion 344.

In the state in which a part of the end of the second sealing member 320 is accommodated in the first receiving portion 346, the first clip protrusion 344 may be disposed to cover an outer surface of the first sealing member 310, and an arrangement state of the first separator 210 and the second separator 220 may be constrained by interference by the first clip protrusion 344.

In particular, a first extension portion 312 may be provided at an end of the first sealing member 310 and may protrude from an outer periphery of the first sealing member 310 (protrude to the outside of the membrane electrode assembly 110). The first fastening clip 340 may be provided on the first extension portion 312.

Since the first fastening clip 340 is provided on the first extension portion 312 extending from the end of the first sealing member 310 as described above, it is possible to obtain an advantageous effect of minimizing an increase in thickness of the fuel cell 100 caused by the first fastening clip 340 provided on the first sealing member 310.

According to another embodiment of the present disclosure, the first fastening clip may be provided directly on the first sealing member without the first extension portion. However, in the case in which the first fastening clip is provided directly on the first sealing member, a thickness of the first sealing member is inevitably increased due to the first fastening clip, which causes a problem in that an overall thickness of the fuel cell increases. Therefore, the first extension portion 312 may extend from the end of the first sealing member 310, and the first fastening clip 340 may be provided on the first extension portion 312.

According to the exemplary embodiment of the present disclosure, the second sealing member 320 has through portions 324 each penetrated in a thickness direction thereof, and the first fastening clip 340 may be disposed to pass through each of the through portions 324.

Since the first fastening clips 340 are fastened to the second sealing member 320 by passing through the through portions 324 as described above, it is possible to obtain an advantageous effect of stably maintaining the arrangement state of the first fastening clips 340 with respect to the second sealing member 320.

In addition, in a case in which a posture and a position of the first fastening clip 340 are misaligned with the through portion 324, the first fastening clip 340 cannot pass through the through portion 324, and the first separator 210 is spaced apart from the membrane electrode assembly 110. As a result, an operator may easily recognize whether the first separator 210 is assembled erroneously.

In particular, the through portion 324 may be spaced apart from the end of the second sealing member 320 (e.g., an end of the first extension portion). Since the through portion 324 is spaced apart from the end of the second sealing member 320 as described above, it is possible to minimize the outward exposure of the first fastening clip 340 disposed to pass through the through portion 324. As a result, it is possible to obtain an advantageous effect of inhibiting the fastened state made by the first fastening clip 340 from being released by external interference or the like.

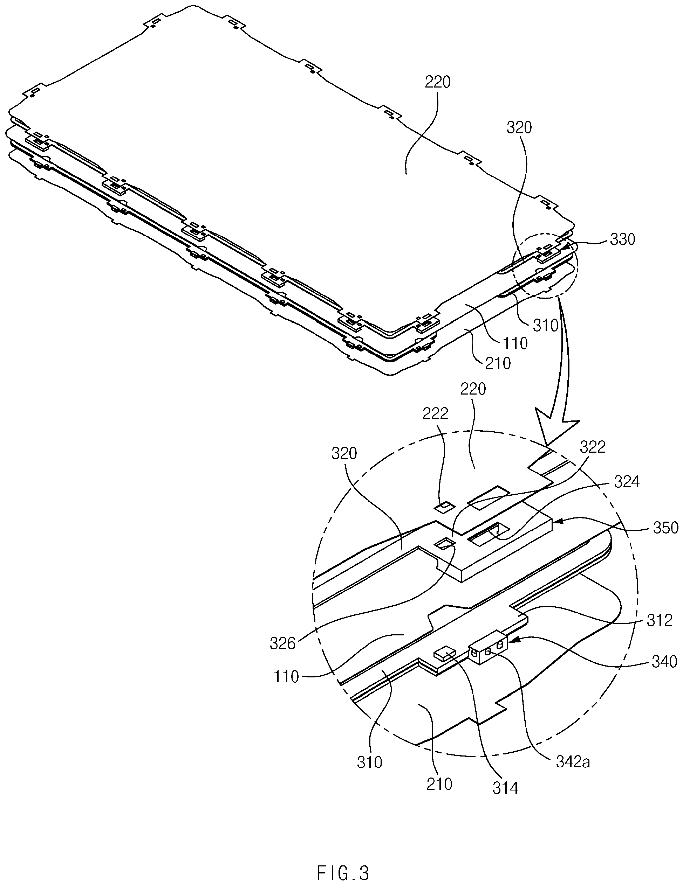

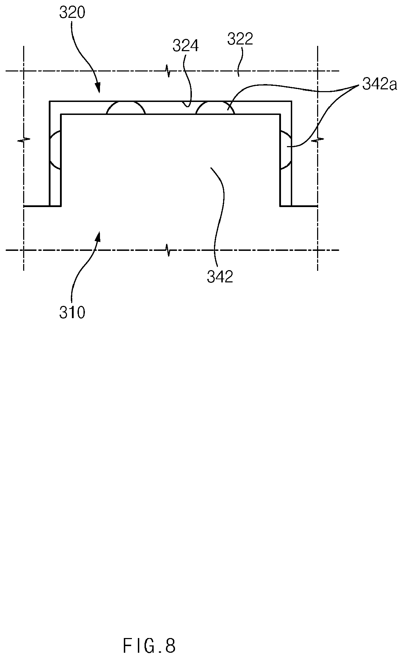

Referring to FIGS. 3 and 8, according to the exemplary embodiment of the present disclosure, the fuel cell 100 may include elastic protrusions 342a each provided on a circumferential surface of the first clip body 342 that faces an inner wall surface of the through portion 324. The elastic protrusion 342a may be elastically compressed between the inner wall surface of the through portion 324 and the circumferential surface of the first clip body 342.

The elastic protrusion 342a may have various structures in accordance with required conditions and design specifications, and the present disclosure is not limited or restricted by the structure and the shape of the elastic protrusion 342a.

For example, a plurality of elastic protrusions 342a each having an approximately hemispheric shape may be provided on the circumferential surface of the first clip body 342 so as to be spaced apart from one another. According to another embodiment of the present disclosure, the elastic protrusion may have a continuously shape (e.g., a 'U' shape) along the circumferential surface of the first clip body.

As described above, in the embodiment of the present disclosure, the elastic protrusion 342a is provided on the circumferential surface of the first clip body 342, and the elastic protrusion 342a is elastically compressed between the inner wall surface of the through portion 324 and the circumferential surface of the first clip body 342 when the first clip body 342 is disposed in the through portion 324. As a result, it is possible to obtain an advantageous effect of more securely and stably maintaining the fastened state made by the first fastening clip 340.

According to the exemplary embodiment of the present disclosure, the fastening part 330 may include second fastening clips 350 provided on the second sealing member 320 and configured to be fastened to the first sealing member 310.

According to the exemplary embodiment of the present disclosure, the second fastening clip 350 may be provided unitarily with the second sealing member 320.

In particular, the second fastening clip 350 may be made of the same material as or a similar material to the second sealing member 320.

More particularly, the second fastening clips 350 and the second sealing member 320 may be integrally provided on the second separator 220 by injection molding (e.g., dual injection molding). Since the second fastening clips 350 and the second sealing member 320 are integrally provided on the second separator 220 by injection molding as described above, the second sealing member 320 and the second fastening clips 350 may be provided together by means of a single injection molding process. As a result, it is possible to obtain an advantageous effect of simplifying a manufacturing process and improving productivity and production efficiency.

According to another embodiment of the present disclosure, the second fastening clips may be manufactured separately from the second sealing member and then attached or coupled to the second sealing member.

The second fastening clip 350 may have various structures capable of being fastened to (constrained against) the first sealing member 310.

Hereinafter, an example in which the fastening part 330 includes the plurality of second fastenings clip 350 provided to be spaced apart from one another in a circumferential direction of the second sealing member 320 will be described. In this case, the number of second fastening clips 350 and a spacing interval between the second fastening clips 350 may be variously changed in accordance with required conditions and design specifications.

For example, the second fastening clip 350 may include a second clip body 352 connected to the second sealing member 320, and a second clip protrusion 354 connected to the second clip body 352 so as to be elastically flexible and configured to define a second receiving portion that accommodates the second sealing member 320 in cooperation with the second clip body 352.

The second clip body 352 and the second clip protrusion 354 may be provided at an outer peripheral end of the second sealing member 320 so as to define the second receiving portion having an approximately 'U' shape. In the state in which the first separator 210 and the second separator 220 are in close contact with one surface and the other surface of the membrane electrode assembly 110, a part of an end of the first sealing member 310 may be accommodated in the second receiving portion so as to be disposed between the second clip body 352 and the second clip protrusion 354.

In the state in which a part of the end of the first sealing member 310 is accommodated in the second receiving portion, the second clip protrusion 354 may be disposed to cover an outer surface of the first sealing member 310, and an arrangement state of the first separator 210 and the second separator 220 may be constrained by interference by the second clip protrusion 354.

In particular, a second extension portion 322 may be provided at the end of the second sealing member 320 so as to correspond to the first extension portion 312, and the second fastening clip 350 may be provided on the second extension portion 322.

For example, the second extension portion 322 may have a shape corresponding to a shape of the first extension portion 312. The second fastening clip 350 may be provided on the second extension portion 322 protruding from an outer periphery of the second sealing member 320 (protruding to the outside of the membrane electrode assembly 110).

Since the second fastening clip 350 is provided on the second extension portion 322 extending from the end of the second sealing member 320 as described above, it is possible to obtain an advantageous effect of minimizing an increase in thickness of the fuel cell 100 caused by the second fastening clip 350 provided on the second sealing member 320.

According to another embodiment of the present disclosure, the second fastening clip may be provided directly on the second sealing member without the second extension portion. However, in the case in which the second fastening clip is provided directly on the second sealing member, a thickness of the second sealing member is inevitably increased due to the second fastening clip, which causes a problem in that an overall thickness of the fuel cell increases. Therefore, the second extension portion 322 may extend from the end of the second sealing member 320, and the second fastening clip 350 may be provided on the second extension portion 322.

In particular, the pair of second fastening clips 350 may be disposed on the second extension portions 322 so as to be spaced apart from each other, such that the pair of second fastening clips 350 are disposed at two opposite sides of the first fastening clip 340 with the first fastening clip 340 interposed therebetween.

As described above, in the embodiment of the present disclosure, the first sealing member 310 and the second sealing member 320 may be fastened to each other by a dual fastening structure including the first fastening clip 340 and the second fastening clip 350. As a result, it is possible to obtain an advantageous effect of more stably constraining the arrangement state of the first separator 210 and the second separator 220 and stably ensuring sealing performance implemented by the first separator 210 and the second separator 220.

In the embodiment of the present disclosure illustrated and described as described above, the example in which the fastening part 330 includes both the first fastening clip 340 and the second fastening clip 350 is described. However, according to another embodiment of the present disclosure, the fastening part may include only the second fastening clip without the first fastening clip.

According to the exemplary embodiment of the present disclosure, the fuel cell 100 may include a guide protrusion 314 protruding from one surface of the first sealing member 310 that faces the second sealing member 320, and a guide hole 326 provided in the second sealing member 320 so as to correspond to the guide protrusion 314 and configured to accommodate the guide protrusion 314.

For example, the guide protrusion 314 may be provided in the form of a quadrangular column having a quadrangular cross section, and the guide hole 326 may be provided in the form of a quadrangular hole corresponding to the guide protrusion 314. According to another embodiment of the present disclosure, the guide protrusion may have a circular cross-sectional shape or another cross-sectional shape.

In particular, an alignment hole 112 may be penetratively provided in the membrane electrode assembly 110, and the guide protrusion 314 may penetrate the alignment hole 112 and be accommodated in the guide hole 326.

More particularly, the fuel cell 100 may include a through hole 222 provided in the second separator 220 so as to correspond to the guide protrusion 314 and configured to accommodate the guide protrusion 314. The guide protrusion 314 may be disposed to sequentially pass through the guide hole 326, the alignment hole 112, and the through hole 222.

As described above, in the embodiment of the present disclosure, since the guide protrusion 314 is provided on the first sealing member 310, and the guide protrusion 314 sequentially passes through the guide hole 326, the alignment hole 112, and the through hole 222, it is possible to inhibit the second sealing member 320 from moving and departing from the first sealing member 310. As a result, it is possible to obtain an advantageous effect of more stably maintaining the fastened state made by the first fastening clip 340 and the second fastening clip 350.

In addition, in a case in which a posture and a position of the second sealing member 320 are misaligned with the first sealing member 310, the guide protrusion 314 cannot pass through the guide hole 326, and the first separator 210 (or the second separator) is spaced apart from the membrane electrode assembly 110. As a result, an operator may easily recognize whether the first separator 210 and the second separator 220 are assembled erroneously.

For reference, in the embodiment of the present disclosure, the example in which only the single guide protrusion 314 is provide is described. However, according to another embodiment of the present disclosure, a plurality of guide protrusions may be provided to be spaced apart from one another.

As described above, according to the embodiment of the present disclosure, it is possible to obtain an advantageous effect of improving the safety and the reliability of the fuel cell and simplifying the structure and the manufacturing process.

In particular, according to the embodiment of the present disclosure, it is possible to obtain an advantageous effect of securely fastening the separators without a welding process.

In addition, according to the embodiment of the present disclosure, it is possible to obtain an advantageous effect of minimizing deformation of and damage to the fastened portions between the separators and securely maintaining the coupled and sealed states of the separators.

In addition, according to the embodiment of the present disclosure, it is possible to obtain an advantageous effect of simplifying the structure and the process of manufacturing the fuel cell and reducing the manufacturing costs.

In addition, according to the embodiment of the present disclosure, it is possible to obtain an advantageous effect of easily handling the fuel cell, simplifying the processes of testing and replacing the fuel cell, and reducing the time and costs required to replace the fuel cell.

In addition, according to the embodiment of the present disclosure, it is possible to obtain an advantageous effect of improving the degree of design freedom and the spatial utilization.

While the embodiments have been described above, the embodiments are just illustrative and not intended to limit the present disclosure.

## Claims

1. A fuel cell comprising (100):
a membrane electrode assembly (110);
a first separator (210) stacked on a first surface of the membrane electrode assembly (110);
a second separator (220) stacked on a second surface of the membrane electrode assembly (110);
a first sealing member (310) disposed on the first separator (210) and configured to seal a space between the first separator (210) and the membrane electrode assembly (110); and
a second sealing member (320) disposed on the second separator (220) and configured to seal a space between the second separator (220) and the membrane electrode assembly (110);
**characterized by**
a fastening part (330) configured to fasten the first sealing member (310) to the second sealing member (320), wherein the fastening part (330) comprises a first fastening clip (340) disposed on the first sealing member (310) and configured to be fastened to the second sealing member (320).

2. The fuel cell of claim 1, wherein the first fastening clip (340) comprises:
a first clip body (342) connected to the first sealing member (310); and
a first clip protrusion (344) connected to the first clip body (342) and defining a first receiving portion (346) that is configured to accommodate the second sealing member (320) in cooperation with the first clip body (342).

3. The fuel cell of claim 2, wherein the second sealing member (320) has a through portion (324) disposed in a thickness direction thereof, and the first fastening clip (340) is configured to pass through the through portion (324).

4. The fuel cell of claim 3, comprising:
an elastic protrusion (342a) disposed on a circumferential surface of the first clip body (342) facing an inner wall surface of the through portion (324),
wherein the elastic protrusion (342a) is elastically compressed between the inner wall surface of the through portion (324) and the circumferential surface of the first clip body (342).

5. The fuel cell of claim 1, wherein the first fastening clip (340) is disposed unitarily with the first sealing member (320).

6. The fuel cell of claim 5, wherein the first fastening clip (340) and the first sealing member (320) are integrally injection molded on the first separator (210).

7. The fuel cell of claim 1, wherein the fastening part (330) comprises a second fastening clip (350) disposed on the second sealing member (320) and configured to be fastened to the first sealing member (310).

8. The fuel cell of claim 7, wherein the second fastening clip (350) comprises:
a second clip body (352) connected to the second sealing member (320); and
a second clip protrusion (354) connected to the second clip body (352) and defining a second receiving portion that is configured to accommodate the first sealing member (310) in cooperation with the second clip body (354).

9. The fuel cell of claim 8, wherein the second fastening clip (350) is disposed unitarily with the second sealing member (320).

10. The fuel cell of claim 9, wherein the second fastening clip (350) and the second sealing member (320) are integrally injection molded on the second separator (220).

11. The fuel cell of claim 7, comprising:
a first extension portion (312) extending from an end of the first sealing member (310); and
a second extension portion (322) extending from an end of the second sealing member (320) to correspond to the first extension portion (312),
wherein the first fastening clip (340) is disposed on the first extension portion (312), and the second fastening clip (350) is disposed on the second extension portion (322).

12. The fuel cell of claim 1, comprising:
a guide protrusion (314) protruding from a surface of the first sealing member (310) that faces the second sealing member (320); and
a guide hole (326) defined in the second sealing member (320) to correspond to the guide protrusion (314) and configured to accommodate the guide protrusion (314).

13. The fuel cell of claim 12, wherein the membrane electrode assembly (110) has an alignment hole (112), and the guide protrusion (314) is configured to pass through the alignment hole (112) to be accommodated in the guide hole 326).

14. The fuel cell of claim 12, comprising:
a through hole (222) defined in the second separator (220) to correspond to the guide protrusion (314) and configured to accommodate the guide protrusion (314).

## Patentansprüche

1. Brennstoffzelle, die aufweist (100):
eine Membran-Elektroden-Anordnung (110);
einen ersten Separator (210), der auf einer ersten Fläche der Membran-Elektroden-Anordnung (110) angeordnet ist;
einen zweiten Separator (220), der auf einer zweiten Fläche der Membran-Elektroden-Anordnung (110) angeordnet ist;
ein erstes Dichtungselement (310), das sich an dem ersten Separator (210) befindet und dazu ausgebildet ist, einen Raum zwischen dem ersten Separator (210) und der Membran-Elektroden-Anordnung (110) abzudichten; und
ein zweites Dichtungselement (320), das sich an dem zweiten Separator (220) befindet und dazu ausgebildet ist, einen Raum zwischen dem zweiten Separator (220) und der Membran-Elektroden-Anordnung (110) abzudichten;
**gekennzeichnet durch**
ein Befestigungsteil (330), das dazu ausgebildet ist, das erste Dichtungselement (310) an dem zweiten Dichtungselement (320) zu befestigen, wobei das Befestigungsteil (330) einen ersten Befestigungsclip (340) aufweist, der sich an dem ersten Dichtungselement (310) befindet und dazu ausgebildet ist, an dem zweiten Dichtungselement (320) befestigt zu sein.

2. Brennstoffzelle nach Anspruch 1, wobei der erste Befestigungsclip (340) aufweist:
einen ersten Clip-Körper (342), der mit dem ersten Dichtungselement (310) verbunden ist; und
einen ersten Clip-Vorsprung (344), der mit dem ersten Clip-Körper (342) verbunden ist und einen ersten Aufnahmeabschnitt (346) definiert, der dazu ausgebildet ist, das zweite Dichtungselement (320) in Zusammenarbeit mit dem ersten Clip-Körper (342) aufzunehmen.

3. Brennstoffzelle nach Anspruch 2, wobei das zweite Dichtungselement (320) einen in dessen Dickenrichtung angeordneten Durchgangsabschnitt (324) aufweist, und wobei der erste Befestigungsclip (340) dazu ausgebildet ist, durch den Durchgangsabschnitt (324) hindurchzugehen.

4. Brennstoffzelle nach Anspruch 3, die aufweist:
einen elastischen Vorsprung (342a), der sich an einer Umfangsfläche des ersten Clip-Körpers (342) befindet und einer Innenwandfläche des Durchgangsabschnitts (324) zugewandt ist,
wobei der elastische Vorsprung (342a) zwischen der Innenwandfläche des Durchgangsabschnitts (324) und der Umfangsfläche des ersten Clip-Körpers (342) elastisch zusammengedrückt ist.

5. Brennstoffzelle nach Anspruch 1, wobei der erste Befestigungsclip (340) einheitlich mit dem ersten Dichtungselement (320) angeordnet ist.

6. Brennstoffzelle nach Anspruch 5, wobei der erste Befestigungsclip (340) und das erste Dichtungselement (320) einstückig an dem ersten Separator (210) spritzgegossen sind.

7. Brennstoffzelle nach Anspruch 1, wobei der erste Befestigungsteil (330) einen zweiten Befestigungsclip (350) aufweist, der sich an dem zweiten Dichtungselement (320) befindet und dazu ausgebildet ist, an dem ersten Dichtungselement (310) befestigt zu sein.

8. Brennstoffzelle nach Anspruch 7, wobei der zweite Befestigungsclip (350) aufweist:
einen zweiten Clip-Körper (352), der mit dem zweiten Dichtungselement (320) verbunden ist; und
einen zweiten Clip-Vorsprung (354), der mit dem zweiten Clip-Körper (352) verbunden ist und einen zweiten Aufnahmeabschnitt definiert, der dazu ausgebildet ist, das erste Dichtungselement (310) in Zusammenarbeit mit dem zweiten Clip-Körper (354) aufzunehmen.

9. Brennstoffzelle nach Anspruch 8, wobei der zweite Befestigungsclip (350) einheitlich mit dem zweiten Dichtungselement (320) angeordnet ist.

10. Brennstoffzelle nach Anspruch 9, wobei der zweite Befestigungsclip (350) und das zweite Dichtungselement (320) einstückig an dem zweiten Separator (220) spritzgegossen sind.

11. Brennstoffzelle nach Anspruch 7, die aufweist:
einen ersten Erstreckungsabschnitt (312), der sich von einem Ende des ersten Dichtungselements (310) aus erstreckt; und
einen zweiten Erstreckungsabschnitt (322), der sich von einem Ende des zweiten Dichtungselements (320) aus erstreckt, um dem ersten Erstreckungsabschnitt (312) zu entsprechen,
wobei sich der erste Befestigungsclip (340) an dem ersten Erstreckungsabschnitt (312) befindet, und wobei sich der zweite Befestigungsclip (350) an dem zweiten Erstreckungsabschnitt (322) befindet.

12. Brennstoffzelle nach Anspruch 1, die aufweist:
einen Führungsvorsprung (314), der von einer Fläche des ersten Dichtungselements (310) vorsteht, die dem zweiten Dichtungselement (320) zugewandt ist; und
ein Führungsloch (326), das in dem zweiten Dichtungselement (320) definiert ist, um dem Führungsvorsprung (314) zu entsprechen, und dazu ausgebildet ist, den Führungsvorsprung (314) aufzunehmen.

13. Brennstoffzelle nach Anspruch 12, wobei die Membran-Elektroden-Anordnung (110) ein Ausrichtungsloch (112) aufweist, und wobei der Führungsvorsprung (314) dazu ausgebildet ist, durch das Ausrichtungsloch (112) hindurchzugehen, um in dem Führungsloch (326) aufgenommen zu sein.

14. Brennstoffzelle nach Anspruch 12, die aufweist:
ein Durchgangsloch (222), das in dem zweiten Separator (220) definiert ist, um dem Führungsvorsprung (314) zu entsprechen, und dazu ausgebildet ist, den Führungsvorsprung (314) aufzunehmen.

## Revendications

1. Pile à combustible comprenant (100) :
un ensemble d'électrodes à membrane (110) ;
un premier séparateur (210) empilé sur une première surface de l'ensemble d'électrodes à membrane (110) ;
un second séparateur (220) empilé sur une seconde surface de l'ensemble d'électrodes à membrane (110) ;
un premier élément d'étanchéité (310) disposé sur le premier séparateur (210) et conçu pour sceller un espace entre le premier séparateur (210) et l'ensemble d'électrodes à membrane (110) ; et
un second élément d'étanchéité (320) disposé sur le second séparateur (220) et conçu pour sceller un espace entre le second séparateur (220) et l'ensemble d'électrodes à membrane (110) ;
**caractérisée par**
une partie de fixation (330) conçue pour fixer le premier élément d'étanchéité (310) au second élément d'étanchéité (320), dans laquelle la partie de fixation (330) comprend une première attache de fixation (340) disposée sur le premier élément d'étanchéité (310) et conçue pour être fixée au second élément d'étanchéité (320).

2. Pile à combustible selon la revendication 1, dans laquelle la première attache de fixation (340) comprend :
un premier corps d'attache (342) relié au premier élément d'étanchéité (310) ; et
une première saillie d'attache (344) reliée au premier corps d'attache (342) et définissant une première partie de réception (346) conçue pour accueillir le second élément d'étanchéité (320) en coopération avec le premier corps d'attache (342).

3. Pile à combustible selon la revendication 2, dans laquelle le second élément d'étanchéité (320) a une partie traversante (324) disposée dans le sens de l'épaisseur, et la première attache de fixation (340) est conçue pour traverser la partie traversante (324).

4. Pile à combustible selon la revendication 3, comprenant :
une saillie élastique (342a) disposée sur une surface circonférentielle du premier corps d'attache (342) en face d'une surface de paroi intérieure de la partie traversante (324),
dans laquelle la saillie élastique (342a) est comprimée de manière élastique entre la surface de paroi intérieure de la partie traversante (324) et la surface circonférentielle du premier corps d'attache (342).

5. Pile à combustible selon la revendication 1, dans laquelle la première attache de fixation (340) est disposé de manière unitaire avec le premier élément d'étanchéité (320).

6. Pile à combustible selon la revendication 5, dans laquelle la première attache de fixation (340) et le premier élément d'étanchéité (320) sont intégralement moulés par injection sur le premier séparateur (210).

7. Pile à combustible selon la revendication 1, dans laquelle la partie de fixation (330) comprend une seconde attache de fixation (350) disposée sur le second élément d'étanchéité (320) et conçue pour être fixée au premier élément d'étanchéité (310).

8. Pile à combustible selon la revendication 7, dans laquelle la seconde attache de fixation (350) comprend :
un second corps d'attache (352) relié au second élément d'étanchéité (320) ; et
une seconde saillie d'attache (354) reliée au second corps d'attache (352) et définissant une seconde partie de réception conçue pour accueillir le premier élément d'étanchéité (310) en coopération avec le second corps d'attache (354).

9. Pile à combustible selon la revendication 8, dans laquelle la seconde attache de fixation (350) est disposée de manière unitaire avec le second élément d'étanchéité (320).

10. Pile à combustible selon la revendication 9, dans laquelle la seconde attache de fixation (350) et le second élément d'étanchéité (320) sont intégralement moulés par injection sur le second séparateur (220).

11. Pile à combustible selon la revendication 7, comprenant :
une première partie d'extension (312) s'étendant à partir d'une extrémité du premier élément d'étanchéité (310) ; et
une seconde partie d'extension (322) s'étendant à partir d'une extrémité du second élément d'étanchéité (320) pour correspondre à la première partie d'extension (312),
dans laquelle la première attache de fixation (340) est disposée sur la première partie d'extension (312), et la seconde attache de fixation (350) est disposée sur la seconde partie d'extension (322).

12. Pile à combustible selon la revendication 1, comprenant :
une saillie de guidage (314) faisant saillie à partir d'une surface du premier élément d'étanchéité (310) qui fait face au second élément d'étanchéité (320) ; et
un trou de guidage (326) défini dans le second élément d'étanchéité (320) pour correspondre à la saillie de guidage (314) et conçu pour accueillir la saillie de guidage (314).

13. Pile à combustible selon la revendication 12, dans laquelle l'ensemble d'électrodes à membrane (110) a un trou d'alignement (112), et la saillie de guidage (314) est conçue pour traverser le trou d'alignement (112) et être accueillie dans le trou de guidage (326).

14. Pile à combustible selon la revendication 12, comprenant :
un trou de passage (222) défini dans le second séparateur (220) pour correspondre à la saillie de guidage (314) et conçu pour accueillir la saillie de guidage (314).
